# EUROPÄISCHE PATENTSCHRIFT

(11) **EP 1 102 229 B1**
(45) Veröffentlichungstag und Bekanntmachung des Hinweises auf die Patenterteilung: **17.08.2005**
(21) Anmeldenummer: 00890284.3
(22) Anmeldetag: 19.09.2000
(51) Int. Cl.: G09B 9/042, G09B 19/16

(54) **Vorrichtung zur Beeinflussung von Kraftfahrzeugen**
Device for influencing vehicles
Dispositif pour influencer le comportement de conduite de véhicules

(30) Priorität: 18.11.1999 AT 195699
(43) Veröffentlichungstag der Anmeldung: 23.05.2001
(73) Patentinhaber: Thurner, Jörg, Ing., 1180 Wien (AT)
(72) Erfinder: Thurner, Jörg, Ing., 1180 Wien (AT)
(74) Vertreter: Babeluk, Michael, Dipl.-Ing.

(56) Entgegenhaltungen:
- AU-A- 687 338
- DATABASE WPI Section PQ, Week 199033 Derwent Publications Ltd., London, GB; Class P85, AN 1990-252945 XP002201554 -& SU 1 524 085 A (BELORUSSIAN POLY), 23. November 1989 (1989-11-23)

## Beschreibung

Die vorliegende Erfindung betrifft eine Vorrichtung zur Beeinflussung von Kraftfahrzeugen in Form einer Schleuderplatte gemäß dem Oberbegriff von Patentanspruch 1.

Der Anmelder der vorliegenden Anmeldung hat sogenannte Schleuderplatten entwickelt, gebaut und in Verkehr gebracht, die zur Ausbildung von Fahrern von Kraftfahrzeugen eingesetzt werden. Mit solchen bekannten Schleuderplatten kann insbesondere das Verhalten beim sogenannten Übersteuern eines Fahrzeuges trainiert werden. Wenn beispielsweise auf glatter Fahrbahn die Hinterräder eines Fahrzeugs in der Kurve nach außen wegrutschen, d. h., wenn das Übersteuern auftritt, kann ein Fahrzeug nur durch schnelles und richtiges Verhalten des Lenkers abgefangen werden. Da solche Situationen jedoch bei vernünftigem Fahrverhalten in der Praxis äußerst selten auftreten, muss die richtige Reaktion für den Ernstfall gezielt geübt werden. Bei herkömmlichen Schleuderplatten lässt man das Fahrzeug mit einer mittleren Geschwindigkeit von beispielsweise 50 km/h über die Platte fahren. Nach dem Auffahren der Hinterräder wird die Platte seitlich ausgelenkt, um dem Kraftfahrzeug im Bereich der Hinterachse einen seitlichen Impuls zu verleihen. Die Bewegung dauert an, bis die Hinterräder die Platte verlassen haben, die danach gebremst und in die Mittelstellung zurückbewegt wird. Im Anschluss an die Schleuderplatte ist zumeist ein Gleitbelag mit verringertem Reibwert vorgesehen. Auf diese Weise kann gezielt das Übersteuern simuliert werden. Durch eine geeignete Einstellung der Auslenkgeschwindigkeit im Zusammenhang mit der Fahrgeschwindigkeit des Fahrzeugs, wodurch sich auch der Weg ergibt, um den die Hinterachse ausgelenkt wird, kann der Schwierigkeitsgrad der Übung reproduzierbar eingestellt werden.

Es wurden bereits Überlegungen angestellt, solche Schleuderplatten auch für das Fahrtraining von Motorradfahrern zu verwenden. Bei Motorrädern steht jedoch nicht die Simulation einer Situation im Vordergrund, bei der das Hinterrad die Haftung verliert, da eine solche Situation für einen Motorradfahrer praktisch unbeherrschbar ist. Sehr wohl sinnvoll ist es jedoch, Situationen zu üben, die beim Überfahren von Spurrillen, Straßenbahnschienen oder dgl. auftreten, um die diesbezüglichen Gefahren besser abschätzen zu können und einen Sturz im Ernstfall vermeiden zu können. Es hat sich dabei herausgestellt, dass auch ein geübter Motorradfahrer im allgemeinen nicht in der Lage ist einen Sturz zu vermeiden, wenn eine herkömmliche Schleuderplatte in einer Weise betrieben wird, wie sie für ungeübte Fahrer von mehrspurigen Kraftfahrzeugen eingesetzt wird. Überraschenderweise hat jedoch auch eine Reduktion der Auslenkgeschwindigkeit und der Länge der Auslenkbewegung nicht zu befriedigenden Ergebnissen geführt, so dass es in der Fachwelt als nicht möglich oder sinnvoll angesehen worden ist, Schleuderplatten für das Training von Motorradfahrern zu verwenden.

Aufgabe der vorliegenden Erfindung ist es, die oben genannten Nachteile zu vermeiden und die eingangs beschriebene Vorrichtung so weiterzubilden, dass es insbesondere möglich ist, auch ein sinnvolles Training von Motorradfahrern durchzuführen.

Erfindungsgemäß ist vorgesehen, dass die Antriebseinrichtung Hebel umfasst, die in einer gestreckten Stellung eine Endstellung der Platte definieren.

Wie bei bekannten Schleuderplatten wird bei der erfindungsgemäßen Vorrichtung die Annäherung des Kraftfahrzeugs, insbesondere des Motorrades, durch Lichtschranken oder ähnliche Sensoren genau erfasst, um gezielt den Beginn der Bewegung einleiten zu können. Wie bei der bekannten Vorrichtung ist es daher möglich, im Rahmen der Messgenauigkeit den Zeitpunkt festzulegen, an dem das Hinterrad bzw. die Hinterräder des Kraftfahrzeugs auf die Platte auffahren. Sobald dies sichergestellt ist, wird mit der Seitwärtsbewegung begonnen. Wesentlich für die vorliegende Erfindung ist, dass die Wegstrecke, um die das Hinterrad des Motorrades bewegt wird, genau definiert ist. Dies wird dadurch erreicht, dass sowohl der Beginn als auch das Ende der Bewegung dann stattfindet, wenn sich das Hinterrad auf der Platte befindet. Der Auslenkweg und damit der Schwierigkeitsgrad der Übung wird dadurch eingestellt, dass die Platte vor Beginn der Übung um genau diesen Weg aus der Endlage bewegt wird. Etwaige Ungenauigkeiten bei der Erfassung des Zeitpunkts, an dem das Hinterrad auf die Platte auffährt, bewirken daher bei der erfindungsgemäßen Vorrichtung nur eine Veränderung des Zeitpunkts, zu dem die Auslenkbewegung durchgeführt wird, nicht jedoch eine Veränderung des Weges. Im Gegensatz dazu wird bei bekannten Schleuderplatten die Auslenkbewegung begonnen, nachdem die Hinterräder des Kraftfahrzeuges aufgefahren sind und zumindest so lang fortgesetzt, bis diese die Platte verlassen haben. Auf diese Weise kann eine genau definierte seitliche Geschwindigkeit der Räder beim Verlassen der Platte gewährleistet werden. Naturgemäß ist jedoch bei diesen Schleuderplatten der Auslenkweg auch bei vorgegebener Einstellung nicht mehr konstant, wenn Messungenauigkeiten auftreten, die einen Einfluss auf den Beginn der Auslenkbewegung haben.

Der Erfinder der vorliegenden Erfindung hat erkannt, dass diese Tatsache, die bei mehrspurigen Kraftfahrzeugen völlig unerheblich ist, die Ursache für die Unbrauchbarkeit solcher Schleuderplatten für Motorräder ist. Da herkömmliche Schleuderplatten am Ende ihrer Bewegung gegen einen weichen Anschlag fahren, um die Platte zum Stillstand zu bringen, kann der oben beschriebene Mangel auch nicht durch eine geänderte Ansteuerung der Platte in angemessener Weise behoben werden. Durch die erfindungsgemäße Lösung ist es möglich, den Auslenkweg gezielt vorzugeben, so dass der Schwierigkeitsgrad der Übung in einfacher Weise reproduzierbar festgelegt werden kann.

Eine besonders einfache und sicher funktionierende Ausführungsvariante der vorliegenden Erfindung ist dadurch gekennzeichnet, dass ein erster Hebel vorgesehen ist, der an einem festen Punkt angelenkt ist, und dass ein zweiter Hebel an dem ersten Hebel und an der Platte angelenkt ist. Auf diese Weise ist sichergestellt, dass das Ende der Auslenkbewegung nicht abrupt sondern sanft ausgebildet ist, so dass die Bodenhaftung nicht verloren geht.

Der Antrieb der erfindungsgemäßen Vorrichtung wird bevorzugt dadurch bewirkt, dass weiters ein Hydraulikzylinder vorgesehen ist, der an einem Hebel angreift. Es hat sich herausgestellt, dass auf diese Weise das Beschleunigungs- und Verzögerungsverhalten der Platte am einfachsten beherrschbar ist.

Besonders günstig ist es in dem oben genannten Zusammenhang, wenn ein Hebel als Dreieckhebel ausgebildet ist, wobei der feste Punkt, an dem der Dreieckhebel angelenkt ist, der Anlenkpunkt des zweiten Hebels am Dreieckhebel und der Anlenkpunkt des Hydraulikzylinders am Dreieckhebel ein Dreieck bilden. Dabei wird auch eine einfache und mechanisch robuste Ausführung erreicht.

Im Prinzip ist es möglich, sowohl den Anfang als auch das Ende der Auslenkbewegung elektronisch zu steuern. Es hat sich jedoch als vorteilhaft in der praktischen Ausführung herausgestellt, wenn ein Anschlag der Hebel im Bereich ihrer gestreckten Stellung vorgesehen ist.

Für das Training von Motorradfahrern ist es vorteilhaft, wenn die Auslenkbewegung in gleicher Weise nach beiden Richtungen simuliert werden kann, wobei es in der Praxis möglich ist, die Richtung dem Motorradfahrer vor der Übung bekanntzugeben oder auch nicht. In diesem Zusammenhang ist es besonders vorteilhaft, wenn die Platte aus einer Mittellage in zwei gegenüberliegende Endstellungen beweglich ist, und dass die Antriebseinrichtung zu einer Mittelachse im wesentlichen symmetrisch ausgebildet ist.

Insbesondere dann, wenn Hydraulikzylinder an den Hebeln angreifen, liegt ein Übersetzungsverhältnis der Bewegung des Hydraulikkolbens in Bezug auf die Auslenkung der Platte vor, das sich während der Bewegung relativ stark ändert. Um die daraus resultierenden Effekte zu verringern ist es vorteilhaft, wenn zwei doppeltwirkende Hydraulikzylinder vorgesehen sind, die zur Bewegung der Platte gemeinsam angesteuert werden.

Weiters betrifft die vorliegende Erfindung ein Verfahren zur Beeinflussung von Kraftfahrzeugen, insbesondere von Motorrädern, mit einer im wesentlichen horizontalen Platte, die in der Fahrbahnebene quer zur Fahrtrichtung des Kraftfahrzeugs beweglich angeordnet ist, wobei die Platte während der Überfahrt des Kraftfahrzeuges ausgelenkt wird.

In einer besonders für Motorradfahrer vorteilhaften Art ist dieses Verfahren dadurch gekennzeichnet, dass die Auslenkbewegung der Platte nach der Auffahrt des Hinterrades auf die Platte begonnen wird und beendet wird, bevor das Hinterrad die Platte verlassen hat.

Bevorzugt ist vorgesehen, dass die Schwierigkeit der Übung eingestellt wird, indem der Auslenkweg der Platte verändert wird. Auf diese Weise kann einer Entwicklung des Fahrkönnens gezielt Rechnung getragen werden.

In der Folge wird die vorliegende Erfindung anhand der in den Figuren dargestellten Ausführungsbeispiele näher erläutert. Es zeigen
- Fig. 1: schematisch die Anordnung einer erfindungsgemäßen Vorrichtung auf einem Übungsplatz,
- Fig.2: eine axonometrische Darstellung der wesentlichen Teile einer Ausführungsvariante der erfindungsgemäßen Vorrichtung,
- Fig. 3: eine Draufsicht auf die Bauteile von Fig. 2 und
- Fig. 4 und 5: Diagramme, die die Wirkungsweise der Erfindung erklären.

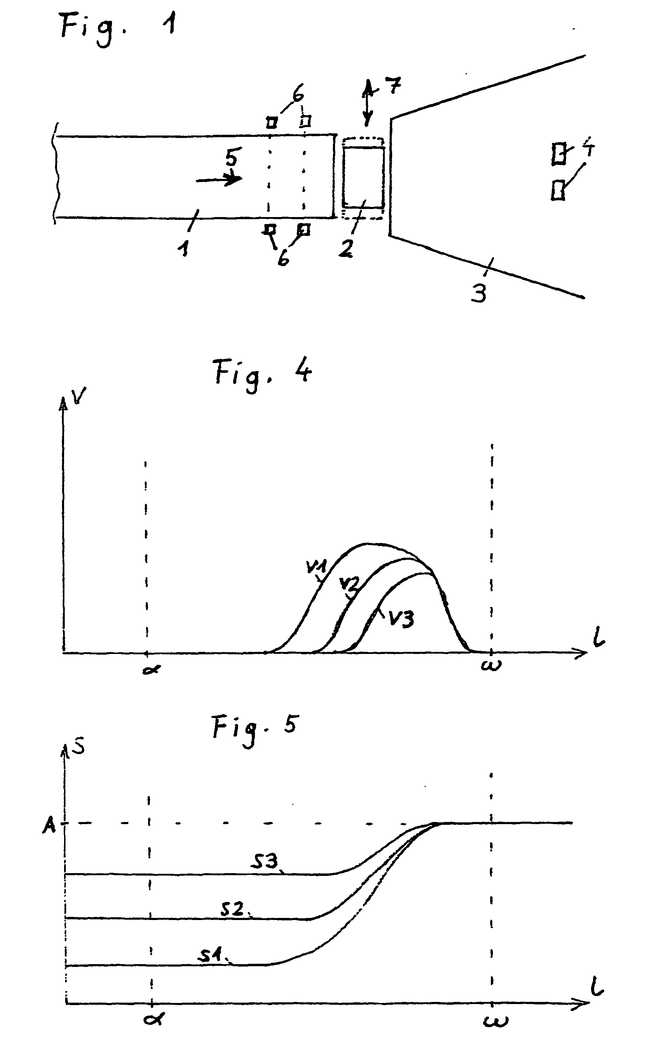

Der Übungsplatz von Fig. 1 besteht aus einer Anlaufstrecke 1, einer Platte 2 und einer Auslauffläche 3 mit Hindernissen 4, die gegebenenfalls beweglich angeordnet sind. Das Kraftfahrzeug fährt im Sinn des Pfeils 5 an der Anlaufstrecke 1 an, wobei die Anfahrt durch Lichtschranken 6 überwacht wird. Wenn sich die Hinterachse des Kraftfahrzeugs auf der Platte 2 befindet, wird diese in der Richtung des Pfeils 7 ausgelenkt, um eine Schleuderbewegung zu simulieren. Im Anschluss darin muss der Fahrer das Kraftfahrzeug abfangen und gegebenenfalls den Hindemissen 4 ausweichen.

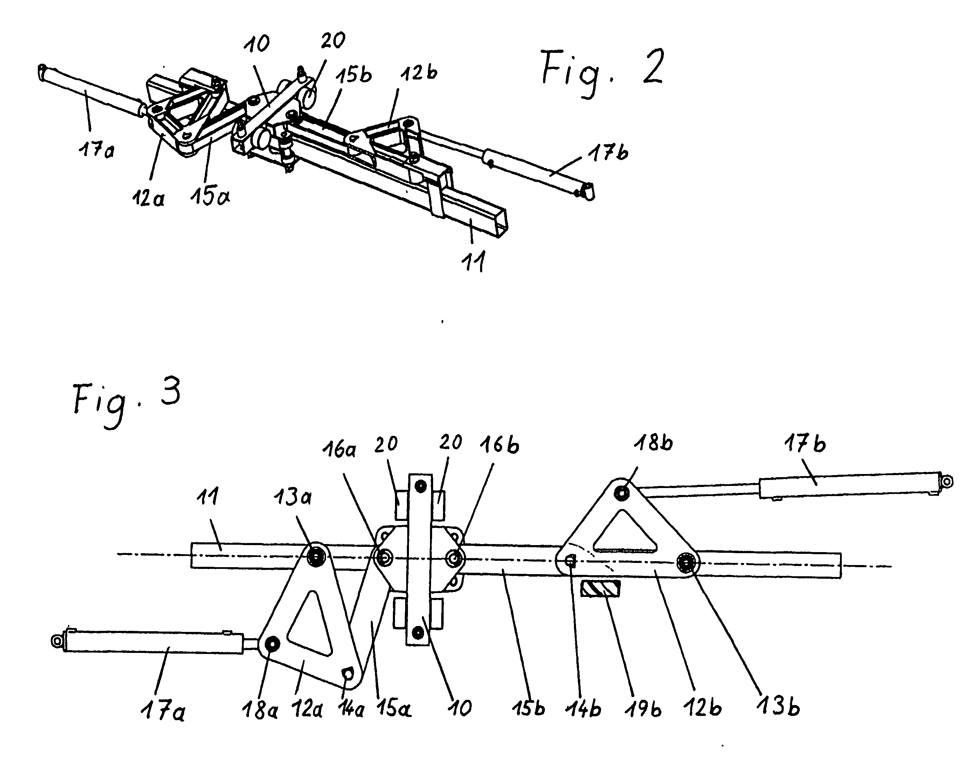

In der Fig. 2 ist der Mechanismus der erfindungsgemäßen Vorrichtung dargestellt. Ein Schlitten 10 ist auf einer Führungsschiene 11 verschiebbar angeordnet. Erste Hebel 12a, 12b sind als Dreieckhebel ausgebildet und an festen Punkten 13a, 13b schwenkbar gelagert. An Anlenkpunkten 14a, 14b sind zweite Hebel 15a, 15b angelenkt, die in Gelenken 16a, 16b mit dem Schlitten 10 verbunden sind. Die Betätigung der Vorrichtung erfolgt über Hydraulikzylinder 17a, 17b, die in Anlenkpunkten 18a, 18b an den Dreieckshebeln 12a, 12b angreifen. An dem Schlitten 10 ist die in den Fig. 2 und 3 nicht dargestellte Platte befestigt. In diesen Darstellungen befindet sich der Schlitten 10 in seiner äußersten linken Position. Vor der Auffahrt eines Kraftfahrzeuges wird der Schlitten 10 durch Betätigung der Hydraulikzylinder 17a, 17b um eine vorbestimmte Wegstrecker nach rechts verschoben. Die Länge dieser Wegstrecke bestimmt den Schwierigkeitsgrad der Übung. Wenn sich die Hinterräder des Kraftfahrzeugs auf der Platte befinden, wird der Schlitten 10 durch die Betätigung der Hydraulikzylinder 17a, 17b wieder in die in den Fig. 2 und 3 dargestellte Stellung gebracht. Die gesamte Bewegung erfolgt, während sich die Hinterräder bzw. bei Motorrädern das Hinterrad auf der Platte befinden.

Um ein Überschwingen am Ende der Auslenkbewegung zu verhindern können Dämpfungskörper 19b vorgesehen sein, die die Bewegung der Dreieckhebel 12a, 12b nur bis zur gestreckten Position zulassen, wie sie in der rechten Hälfte von Fig. 2 und Fig. 3 dargestellt ist. Weitere Dämpfungskörper 20 können am Schlitten 10 angebracht sein.

Das hydraulische System zur Betätigung der Hydraulikzylinder 17a mit Hydraulikpumpen, Ventilen und einer Steuerungseinrichtung ist an sich bekannt, wobei Pneumatikspeicher verwendet werden, um eine kurzfristig große Leistungsabgabe zu ermöglichen.

In den Fig. 4 und 5 ist der Bewegungsablauf in Form von Diagrammen dargestellt. Auf der waagrechten Achse ist dabei der Ort I des Hinterrades eines Motorrades in Längsrichtung bezeichnet, a stellt dabei den Beginn der Platte 2 dar, während ω das Ende der Platte 2 bezeichnet. In dem Diagramm von Fig. 4 ist die Bewegungsgeschwindigkeit v der Platte in Richtung des Pfeils 7 von Fig. 1 auf der senkrechten Achse aufgetragen. Die Kurven V1, V2 und V3 bezeichnen dabei unterschiedliche Schwierigkeitsgrade, wobei V1 die größte Bewegungsgeschwindigkeit darstellt, was somit die schwierigste Übung ergibt. Es ist ersichtlich, dass die Beschleunigung der Platte im Fall der Kurve V1 am frühsten anfängt und dass das Geschwindigkeitsmaximum hier am größten ist.

In der Fig. 5 ist für den gleichen Fall wie in Fig. 4, der Weg s der Auslenkbewegung über den Weg I des Hinterrades in Längsrichtung aufgetragen. Mit A ist der Anschlagpunkt bezeichnet. S3 bezeichnet den Fall entsprechend der Kurve V3 in Fig. 4, bei dem die Platte um den geringsten Weg aus der Anschlagstellung entfernt worden ist. Es ist ersichtlich, dass die Auslenkbewegung relativ spät beginnt und vor dem Verlassen des Hinterrades endet, indem der Anschlagpunkt A erreicht wird. Die schwierigeren Fälle S2 und S3 entsprechen einer größeren Auslenkbewegung am Anfang, wobei aus dem, steileren Anstieg der Kurven ersichtlich ist, dass auch die maximale Bewegungsgeschwindigkeit größer ist als im Fall der Kurve S3.

Die vorliegende Erfindung ermöglicht es auch Motorradfahrern unter realistischen Übungsannahmen die Möglichkeit zu bieten, das Verhalten des Kraftfahrzeuges in kritischen Fahrsituationen kennenzulernen, ohne selbst gefährdet zu werden.

## Patentansprüche

1. Vorrichtung zur Beeinflussung von Kraftfahrzeugen in Form einer Schleuderplatte mit einer im wesentlichen horizontalen Platte (2), die auf einer Führungsschiene (11) gleitbar gelagert ist und die in einer horizontalen Richtung (7) zwischen zwei Endstellungen beweglich angeordnet ist, und mit einer vorzugsweise hydraulisch betätigten Antriebseinrichtung zur Bewegung der Platte, **dadurch gekennzeichnet, dass** die Antriebseinrichtung um einen Drehpunkt (13a, 13b) schwenkbar gelagerte Hebel (12a, 12b; 15a, 15b) umfasst, die in einer gestreckten Stellung eine Endstellung der Platte (2) definieren.

2. Vorrichtung nach Anspruch 1, **dadurch gekennzeichnet, dass** ein erster Hebel (12a, 12b) vorgesehen ist, der an einem festen Punkt (13a, 13b) angelenkt ist und dass mindestens ein zweiter Hebel (15a, 15b) an dem ersten Hebel (12a, 12b) und an der Platte (2) angelenkt ist.

3. Vorrichtung nach einem der Ansprüche 1 oder 2, **dadurch gekennzeichnet, dass** weiters ein Hydraulikzylinder (17a, 17b) vorgesehen ist, der an einem Hebel (12a, 12b) angreift.

4. Vorrichtung nach Anspruch 3, **dadurch gekennzeichnet, dass** mindestens ein Hebel als Dreieckhebel (12a, 12b) ausgebildet ist, wobei der feste Punkt (13a, 13b), an dem der Dreieckhebel (12a, 12b) angelenkt ist, der Anlenkpunkt (14a, 14b) des zweiten Hebels (15a, 15b) am Dreieckhebel (12a, 12b) und der Anlenkpunkt (18a, 18b) des Hydraulikzylinders (17a, 17b) am Dreieckhebel (12a, 12b) ein Dreieck bilden.

5. Vorrichtung nach einem der Ansprüche 1 bis 4, **dadurch gekennzeichnet, dass** ein Anschlag (19b) des Hebels (12b) im Bereich seiner gestreckten Stellung vorgesehen ist.

6. Vorrichtung nach einem der Ansprüche 1 bis 5, **dadurch gekennzeichnet, dass** die Platte (2) aus einer Mittellage in zwei gegenüberliegende Endstellungen beweglich ist, und dass die Antriebseinrichtung zu einer Mittelachse im wesentlichen symmetrisch ausgebildet ist.

7. Vorrichtung nach einem der Ansprüche 1 bis 6, **dadurch gekennzeichnet, dass** zwei doppeltwirkende Hydraulikzylinder (17a, 17b) vorgesehen sind, die zur Bewegung der Platte (2) gemeinsam angesteuert werden.

8. Verfahren zur Beeinflussung von Kraftfahrzeugen, insbesondere von Motorrädern, mit einer im wesentlichen horizontalen Platte (2), die in der Fahrbahnebene quer zur Fahrtrichtung des Kraftfahrzeugs beweglich angeordnet ist, wobei die Platte (2) während der Überfahrt des Kraftfahrzeuges ausgelenkt wird, **dadurch gekennzeichnet, dass** die Auslenkbewegung der Platte (2) nach der Auffahrt des Hinterrades auf die Platte (2) begonnen wird und durch erreichen einer Endstellung der Platte (2), die durch die gestreckte Stellung eines Hebels (12a, 12b; 15a, 15b) definiert ist, beendet wird, bevor das Hinterrad die Platte (2) verlassen hat.

9. Verfahren nach Anspruch 8, **dadurch gekennzeichnet, dass** die Schwierigkeit der Übung eingestellt wird, indem der Auslenkweg der Platte (2) verändert wird.

## Claims

1. Facility for exerting forces on automotive vehicles, configured as a skidding plate with an essentially horizontal plate (2), which is slideably held on a guiding rail (11) and may be moved in horizontal direction (7) between two terminal positions, and with a preferably hydraulically actuated drive mechanism for moving the plate, **characterized in that** the drive mechanism comprises levers (12a, 12b; 15a, 15b) which can be turned about a fulcrum (13a, 13b) and which in an extended position define a terminal position of the plate (2).

2. Facility according to claim 1, **characterized in that** a first lever (12a, 12b) is provided, which is linked to a fixed point (13a, 13b), and that at least one second lever (15a, 15b) is provided, which is linked to the first lever (12a, 12b) and to the plate (2).

3. Facility according to claim 1 or 2, **characterized in that** furthermore a hydraulic cylinder (17a, 17b) is provided, which is connected to said lever (12a, 12b).

4. Facility according to claim 3, **characterized in that** at least one lever is configured as a triangle lever (12a, 12b), with the fixed point (13a, 13b) to which the triangle lever (12a, 12b) is linked, the linkage point (14a, 14b) of the second lever (15a, 15b) on the triangle lever (12a, 12b) and the linkage point (18a, 18b) of the hydraulic cylinder (17a, 17b) on the triangle lever (12a, 12b), forming a triangle.

5. Facility according to any of claims 1 to 4, **characterized in that** a stop (19b) for the lever (12b) is provided in the region of its extended position.

6. Facility according to any of claims 1 to 5, **characterized in that** the plate (2) can be moved from a middle position to two opposing terminal positions, and that the drive mechanism is configured essentially symmetrically relative to a middle axis.

7. Facility according to any of claims 1 to 6, **characterized in that** two hydraulic cylinders (17a, 17b) with two-way action are provided, which are jointly controlled to move the plate (2).

8. A method for exerting forces on automotive vehicles, in particular motorcycles, with an essentially horizontal plate (2), which is positioned in the plane of the roadway and is moveable transversally to the travel direction of the vehicle, which plate (2) is actuated during passage of the vehicle, **characterized in that** the movement of the plate (2) starts after the rear wheel of the vehicle has arrived on the plate (2) and ends, due to the plate (2) reaching a terminal position defined by the extended position of a lever (12a, 12b; 15a, 15b), before the rear wheel of the vehicle has left the plate (2).

9. A method according to claim 8, **characterized in that** the difficulty of the exercise for the driver may be varied by adjusting the length of the movement path of the plate (2).

## Revendications

1. Dispositif pour influencer les véhicules, sous la forme d'un plateau d'accélération comportant une plaque essentiellement horizontale (2) glissant sur un rail de guidage (11) qui se déplace dans une direction horizontale (7) entre deux positions de fin de course ainsi qu'une installation d'entraînement à commande essentiellement hydraulique pour déplacer la plaque,
**caractérisé en ce que**
l'installation d'entraînement comprend des leviers (12a, 12b ; 15a, 15b) montés pivotants autour d'un point de rotation (13a, 13b) qui définissent une position de fin de course de la plaque (2) lorsqu'ils sont en position allongée.

2. Dispositif selon la revendication 1,
**caractérisé par**
un premier levier (12a, 12b) articulé en un point fixe (13a, 13b) et au moins un second levier (15a, 15b) articulé au premier levier (12a, 12b) et à la plaque (2).

3. Dispositif selon l'une des revendications 1 ou 2,
**caractérisé en ce qu'**
il comporte en outre un vérin hydraulique (17a, 17b) attaquant un levier (12a, 12b).

4. Dispositif selon la revendication 3,
**caractérisé en ce qu'**
au moins un levier est un levier triangulaire (12a, 12b), le point fixe (13a, 13b) auquel le levier triangulaire (12a, 12b) est articulé constitue le point d'articulation (14a, 14b) du second levier (15a, 15b) du levier triangulaire (12a, 12b) et le point d'articulation (18a, 18b) du vérin hydraulique (17a, 17b) sur le levier triangulaire (12a, 12b) forme un triangle.

5. Dispositif selon l'une des revendications 1 à 4,
**caractérisé par**
une butée (19b) prévue pour le levier (12b) dans la zone de sa position allongée.

6. Dispositif selon l'une des revendications 1 à 5,
**caractérisé en ce que**
la plaque (2) peut être déplacée à partir d'une position centrale vers deux positions de fin de course, opposées et l'installation d'entraînement est essentiellement symétrique par rapport à son axe médian.

7. Dispositif selon l'une des revendications 1 à 6,
**caractérisé par**
deux vérins hydrauliques (17a, 17b) à double effet commandés en commun pour déplacer la plaque (2).

8. Procédé pour influencer des véhicules, notamment des motos, à l'aide d'une plaque (2) essentiellement horizontale, mobile dans le plan de la voie de circulation, transversalement à la direction de déplacement du véhicule,
la plaque (2) étant déviée pendant le passage du véhicule,
**caractérisé en ce que**
le mouvement de déviation de la plaque (2) commence après l'arrivée de la roue arrière sur la plaque (2) et se termine lorsque la plaque (2) atteint une position de fin de course définie par la position allongée d'un levier (12a, 12b ; 15a, 15b), avant que la roue arrière ne quitte la plaque (2).

9. Procédé selon la revendication 8,
**caractérisé en ce que**
l'on règle la difficulté de l'exercice en modifiant la course de déviation de la plaque (2).
